# EUROPEAN PATENT APPLICATION

(11) **EP 3 330 777 A1**
(43) Date of publication of application: **06.06.2018**
(21) Application number: 16002581.3
(22) Date of filing: 01.12.2016
(51) Int. Cl.: G02C 7/06

(54) **PROGRESSIVE OPHTHALMIC LENS, METHOD OF MANUFACTURING A PROGRESSIVE SPECTACLE LENS AND METHOD OF DESIGNING A PROGRESSIVE SPECTACLE LENS**

(71) Applicant: Carl Zeiss Vision International GmbH, 73430 Aalen (DE)
(72) Inventor: Varnas, Saulius, SA 5048 Brighton (AU)
(74) Representative: Theobald, Andreas

(57) **Abstract**

A progressive ophthalmic lens element is provided which includes:
- an upper viewing zone (7) with a distance reference point (2A) providing a first refractive power adapted to distance vision;
- a lower viewing zone (5) with a near reference point (3A) providing a second refractive power adapted to near vision, the second refractive power representing an addition power relative to the first refractive power;
- a corridor (6) between the upper viewing zone (7) and the lower viewing zone (5) in which the refractive power gradually changes from the first refractive power to the second refractive power; and
- a left peripheral zone (4L) and a right peripheral zone (4R) which are separated by the corridor and the lower viewing zone (5).

Low mean power zones (10, 11, 12) are present in the upper viewing zone (7), the left peripheral zone (4L) and the right peripheral zone (4R) where the mean refractive power does not exceed the first refractive power plus 0.125 D in said low mean power zones (10, 11, 12). In addition, the low mean power zones (10, 11, 12) occupy at least 40 % of the area of the lens element.

## Description

The present invention relates to a progressive ophthalmic lens element for myopia control. In addition, the invention relates to methods of manufacturing and designing progressive spectacle lenses.

To provide focused vision, an eye must be capable of focusing light on the retina. The ability of an eye to focus light on the retina depends to a large extent on the shape of the eyeball. If an eyeball is too long relative to the focal length on the visual axis of the eye an image of a distant object will form in front of the retina, a condition that is called myopia. As a consequence, such an eye, which is called myopic eye, will have difficulties of focusing distant objects on the retina.

Usually glasses with diverging lenses to enlarge the focal length, so that the image of a distant object will form on the retina, are used for correcting myopia.

In many East Asian countries myopia has reached epidemic proportions with some large urban centres reporting close to 100% incidence of myopia among 18 - 19 year olds (Jung S-K et al., Prevalence of myopia and its association with the body stature and educational level in 19-year-old male conscripts in Seoul, South Korea, Invest Ophthalmol Vis Sci. 2012, 53, 5579-5583). It has been estimated that there have been around 2 billion myopes worldwide in 2010 and some of the recent epidemiological modelling suggests that this figure will increase to 5 billion in 2050 (Holden BA et al., Global Prevalence of Myopia and High Myopia and Temporal Trends from 2000 through 2050, Ophthalmology 2016, in press). Furthermore, there is an increasing trend for juveniles to develop high myopia (defined as SER ≤ -5.00 D, where SER stands for spherical equivalent refraction), which substantially increases the risk of eye diseases like cataract, glaucoma, retinal detachment and myopic maculopathy, all of which can cause irreversible vision loss (Wong TY et al., Epidemiology and disease burden of pathologic myopia and myopic choroidal neovascularization: an evidence-based systematic review. Am J Ophthalmol 2014, 157:9-25.e12). Epidemiological models predict a global increase of high myopia from around 300 million in 2010 to 1 billion in 2050 (Holden BA et al., Global Prevalence of Myopia and High Myopia and Temporal Trends from 2000 through 2050, Ophthalmology 2016, in press). This will inevitably lead to a very high cost to society in treating visual impairment and lost productivity.

Bi-focal and progressive lenses have been trialled clinically with the aim of reducing accommodative lag during near vision tasks which is thought to be one of the main causes of juvenile myopia progression that usually coincides with the beginning of schooling. Some of these trials have shown no effect (e.g., Edwards MH et al., The Hong Kong progressive lens myopia control study: study design and main findings, Invest Ophthalmol Vis Sci. 2002, 43, 2852-2858), while others have indicated a significant retardation of myopia in the first year with saturation in longer term trials (e.g., Gwiazda J et al., A randomized clinical trial of progressive addition lenses versus single vision lenses on the progression of myopia in children, Invest Ophthalmol Vis Sci. 2003, 44,1492-1500, Hasebe S et al., Myopia control with positively aspherized progressive addition lenses: a 2-year, multicentre randomized, controlled trial, Invest Ophthalmol Vis Sci. 2014, 55, 7177-7188). The saturation issue may be due to some sort of adaptation of visual behaviour to avoid using the addition power or the adaptation of the accommodative system to the presence of the addition power which leads to the relaxation of the accommodative effort. There is a need to improve PAL (progressive-addition lens) designs to provide a more effective reduction of the accommodative lag and possibly help overcome the saturation of their efficacy to control progression of myopia.

A progressive spectacle lens is usually formed by providing a semi-finished piece of preformed material for the making of a lens, i.e. a semi-finished lens blank. The semi-finished lens blank has a finished lens surface with a specific surface curvature on the front or the back surface and with the other surface not being finished yet. On the surface not finished yet, a free-form surface is formed. In this context, the term "free-form surface" means a surface that may be constructed by the use of piecewise-defined functions such as, e.g., splines and typically shows no point symmetry or axial symmetry. By forming the free-form surface the spectacle lens is provided with an upper viewing zone, i.e. a portion having a first refractive power for distance vision, a lower viewing zone, i.e. a portion having the second refractive power for near vision, and an corridor, i.e. portion of providing clear vision for ranges of refractive power between the first and the second refractive power.

US 8,162,477 B2 discloses a progressive ophthalmic spectacle lens for myopia correction. This progressive ophthalmic spectacle lens comprises an upper area in which the correction is adapted for peripheral vision of the wearer.

EP 2 069 854 B1 describes a progressive ophthalmic spectacle lens in which the mean addition power throughout the peripheral region is positive and at all radial extents greater that 20 mm from the geometric centre of the progressive ophthalmic spectacle lens, is in the range of 0,50 D to 3,00 D.

EP 1 034 453 B1 describes a progressive ophthalmic spectacle lens with a length of the intermediate corridor of 15 mm or less.

Most of the conventional progressive spectacle lenses currently on the market try to ensure a fairly wide near vision zone with a smooth distribution (smooth gradients) of mean addition power in the lower portion of the spectacle lens minimising the size and depth of the peripheral power depressions on both sides of the near vision zone.

WO 2011/054058 A1 describes a progressive ophthalmic spectacle lens with peripheral zones in which peaks with a mean addition power higher than the addition power at the near reference point are located immediately adjacent to the near portion of the progressive ophthalmic spectacle lens. These peaks are laterally separated by at least 20 mm. Further out, the mean addition power may drop steeply to very low values and may even become negative.

It is an objective of the present invention to provide a progressive ophthalmic lens element for myopia control that allows a more effective myopia control through an elimination or at least greater reduction of the accommodative lag during near vision tasks. It is a further objective of the present invention to provide an advantageous method of manufacturing a spectacle lens and an advantageous method of designing progressive spectacle lenses.

The first objective is achieved by a progressive ophthalmic lens element as claimed in claim 1, the second objective by a method of manufacturing a progressive spectacle lens as claimed in claim 18 and the third objective is achieved by a computer implemented method of designing a progressive spectacle lens as claimed in claim 19. The dependent claims contain further developments of the invention.

Before turning to the present invention, an explanation of some expressions used throughout the specification will be given below.

A "toroidal surface" is a surface having mutually perpendicular principal meridians of unequal curvature, of which the cross-section in both principal meridians is nominally circular.

The term "spectacle lens" should include all forms of individual refractive optical bodies employed in the ophthalmic arts including but not limited to spectacle lenses in a spectacle frame, spectacle lenses adapted to a specific spectacle frame or spectacle lenses before glazing.

The term "fitting point" designates that point on the front surface of a lens or semi-finished lens blank stipulated by the manufacturer as a reference point for positioning the lens in front of the eye.

The term "line of sight" refers to a line joining the centre of the fovea to the centre of the exit pupil of the eye, and its continuation from the centre of the entrance pupil forward into object space

The term "primary position" stands for the position of the eye relative to the head, looking straight ahead at an object at eye level.

The term "pantoscopic angle" refers to an angle in the vertical plane between the normal to the front surface of the spectacle lens at its boxed centre, i.e. at the intersection of the horizontal and vertical centrelines.

The term "wrap angle" refers to the angle between the plane of the spectacle front and the plane of the right lens shape, or of the left lens shape. The right or left face form angle is regarded as positive if the temporal side of the right or left lens plane is closer to the head than the plane of the spectacle front. The right and left face form angles may differ, but in practice, the wrap angle is often measured and specified as the average of the right and left wrap angles.

The term "as-worn position" refers to the position and orientation of the spectacles relative to the eyes and face during wear and includes at least values for distance between the centre of rotation of the eye and the back vertex point of the lens, the wrap angle and the pantoscopic angle. In the present invention, an as-worn position is given by a combination of a specific value for distance between the centre of rotation of the eye and the back vertex point of the lens, a specific value for the wrap angle and a specific value for the pantoscopic angle, where the specific value for the distance between the centre of rotation of the eye and the back vertex point of the lens may be a value taken from the range between 20 mm and 30 mm, the specific value for the wrap angle may be a value taken from the range between -5 degree and +15 degree and the specific value for the pantoscopic angle may be a value taken from the range between -20 degree to +30 degree.

An inventive progressive ophthalmic lens element is individually adapted to a specific as-worn position of a wearer and includes an upper viewing zone, a lower viewing zone, a corridor between the upper viewing zone and the lower viewing zone, and left and right peripheral zones. The left peripheral zone and the right peripheral zone are separated by the lower viewing zone and the corridor.

The upper viewing zone includes a distance reference point providing in the as-worn position a first refractive power adapted to distance vision, called distance refractive power in the following, and the lower viewing zone comprises a near reference point providing in the as-worn position a second refractive power adapted to near vision. The second refractive power, called near refractive power in the following, represents an addition power relative to the first refractive power (or distance refractive power). In the corridor between the upper viewing zone and the lower viewing zone the refractive power gradually changes in the as-worn position from the distance refractive power to the near refractive power, i.e. the addition power changes from 0 to the addition power providing the near refractive power.

According to the invention, low mean power zones are present in the upper viewing zone, the left peripheral zone and the right peripheral zone. The distance between the low mean power zone in the left peripheral zone and the low mean power zone in the right peripheral zone is preferably no larger than 25 mm, and in some embodiments of the invention preferably no larger than 20 mm. In said low power zones, the mean refractive power does not exceed the first refractive power plus 0.125 D. In addition, the low mean power zones occupy at least 40%, preferably at least 45%, of the ophthalmic lens element. If the ophthalmic lens element is a round ophthalmic lens element before gazing which has a diameter of at last 40 mm the low mean power zones occupy at least 40 % of an area of the lens element which lies within a diameter of 40 mm around the geometric centre of the lens element.

Preferably, the mean refractive power experienced by a wearer in the left peripheral zone and the right peripheral zone is always below the second refractive power.

The addition power provided by the second refractive power relative to the first refractive power of the inventive lens element may lie in the range of 1.0 D to 3.0 D and, in particular, in the range of 1.5 D to 2.5 D.

A progressive ophthalmic lens element according to an embodiment of the present invention includes a front surface (that is, the surface farthest from the eye) and a back surface (that is, the surface nearest to the eye). The front and/or back surfaces may be shaped to provide suitable contours of refracting power and astigmatism for the upper viewing zone, the lower viewing zone and the corridor.

The front surface and the back surface of the lens may have any suitable shape. In an embodiment, the front surface is a free-form surface and the rear surface is spherical or toric. In another embodiment, the front surface is a spherical or a toric surface and the rear surface is a free-form surface.

In yet another embodiment, both the front and rear surfaces are free-form surfaces. It will be appreciated that a free-form surface may include, for example, an atoric surface, a progressive surface, or combinations thereof.

This invention overcomes the issues mentioned in the background of invention by modifying the size of stable power in the addition zone and by manipulating the peripheral lateral power gradients of this zone. It is hypothesised that these changes to the progressive lens design will stimulate additional accommodative effort and will inhibit its relaxation with time because the presence of the plus power in the lower vision zone will be less obvious to the wearer due to the smaller spatial area covered by the plus power. Furthermore, the negative power gradients on both sides of the near vision zone should help increase the accommodative effort, if these peripheral cues to accommodation are strong enough (Charman WN & Radhakrishnan H, Peripheral refraction and the development of refractive error: a review, Ophthalmic Physiol Opt 2010, 30, 321-338).

Based on the hypothesis described above the inventive progressive ophthalmic lens element has been developed to provide a new and effective myopia control. The ideal effect of this progressive lens would be for the lens not to alter the accommodative response of a child relative to the usual response the eye exhibits with a single vision lens (distance prescription) during near vision tasks but to create an image in front of or on the fovea, or at least to minimise the accommodative lag on the fovea. In contrast thereto, in a standard progressive addition lenses (PAL) the wearer usually sees a large area of plus power in the lower portion of the lens, which may lead to the adjustment (a lowering) of the accommodation response.

With the inventive progressive lens element the near vision zone of the corresponding myopia control progressive addition lens (PAL) can be made narrower than usual and can be surrounded laterally with a relatively low mean power similar to the distance power of the lens. Hence, the near vision zone can be made as narrow as practical while the peripheral power depressions on both sides of the near vision zone can be made as wide as possible. This means that there are relatively steep gradients left and right to the near vision zone. In contrast thereto, conventional PALs currently on the market try to ensure a fairly wide near vision zone with a smooth distribution (smooth gradients) of added mean power in the lower portion of the lens minimising the size and depth of the peripheral power depressions on both sides of the near vision zone.

In the inventive progressive lens element, the low mean power zones in the left and right peripheral zones advantageously extend to a location below a lateral line running through the near reference point to sufficiently surround the lower viewing zone on the left and on the right. In particular, low mean power zones in the left and right peripheral zones which extend at least to lateral lines located 5 mm above and below a lateral line running through the near reference point of the lens element are advantageous. By this measure, most of the lower viewing zone is laterally surrounded by said low power zones.

In the present invention, the low mean power zone in the upper viewing zone may cover all the lens element area (within said 40 mm diameter circle around the geometric centre of the lens element) which lies above a lateral line running through the distance reference point.

In some embodiments of the invention, e.g. in an embodiment in which the second refractive power represents an addition power up to 1.5 D (dioptre) or less to the first refractive power, the low mean power zone in the upper viewing zone, the low mean power zone in the left peripheral zone and the low mean power zone in the right peripheral zone may form a contiguous low power zone. This measure provides a particularly large low power zone. In particular, such a large low mean power zone may occupy at least 50% and preferably at least 60% of said area of the lens element within the 40 mm diameter circle around the geometric centre of the lens element.

In an embodiment of the progressive ophthalmic lens element the second refractive power represents an addition power in the range of 1.5 D and up to 2.0 D. In this embodiment, the low mean power zones in the left and right peripheral zones are separated from the low mean power zone in the upper viewing zone. Areas in which the mean addition power is more than 0.125 D above the distance power but does not reach 0.5 D above the distance power connect the low mean power zone in the upper viewing zone with each of the low mean power zones in the left and right peripheral zones. In this embodiment the low mean power zone may occupy at least 45 % of said area of the lens element within the 40 mm diameter circle around the geometric centre of the lens element.

In another embodiment of the progressive ophthalmic lens element the second refractive power represents an addition power in the range of 2.0 D and up to 2.5 D and the low mean power zones in the left and right peripheral zones are separated from the low mean power zone in the upper viewing zone. An area in which the mean addition is more than 0.125 D above the distance power but does not reach 0.5 D above the distance power connects the low mean power zone in the upper viewing zone with at least one of the low mean power zones in the left and right peripheral zones. In this embodiment the low mean power zone may occupy at least 45 % of said area of the lens element, in particular of within the 40 mm diameter circle around the geometric centre of the lens element if the lens element is a round lens element with a diameter of at least 40 mm.

Preferably, the surface astigmatism of the progressive ophthalmic lens element, in particular of within the 40 mm diameter circle around the geometric centre of the lens element if the lens element is a round lens element with a diameter of at least 40 mm, does not exceed 5.5 D in order to keep aberrations in the peripheral zone as low as possible. If the addition power is in the range of more than 1.5 D and up to 2.0 D the surface astigmatism, in particular of within the 40 mm diameter circle around the geometric centre of the lens element if the lens element is a round lens element with a diameter of at least 40 mm, preferably does not exceed 4.5 D, and if the addition power is 1.5 D or less the surface astigmatism inside the 40 mm diameter preferably does not exceed 3.5 D.

The inventive method of manufacturing a progressive spectacle lens which is adapted to a specific wearer with an individual as-worn position, comprises the steps of:
- obtaining the specific as-worn position of the wearer,
- obtaining a first refractive power for distance vision of the wearer,
- obtaining a second refractive power for near vision of the wearer,
- providing a raw lens"
- based on the specific as-worn position of the wearer, the first refractive power and the second refractive power, forming at least one free-form surface on the front surface and/or the rear surface of the raw lens which defines an upper viewing zone with a distance reference point providing in the as-worn position the first refractive power, a lower viewing zone with a near reference point providing in the as-worn position the second refractive power, a corridor between the upper viewing zone and the lower viewing zone, a left peripheral zone and a right peripheral zone which are separated by the corridor and the lower viewing zone, where the free-form surface is formed such that low mean power zones are present in the upper viewing zone and at least one of the left peripheral zone and the right peripheral zone where, in the specific as-worn position, a mean refractive power experienced by a wearer does not exceed the first refractive power plus 0.125 D in said I low mean power zones, and where said at least one free-form surface is formed such that the low mean power zones occupy at least 40 % of the area of the progressive spectacle lens. Preferably, the mean refractive power experienced by a wearer in the left peripheral zone and the right peripheral zone is always below the second refractive power. The spectacle lens that is manufactured by the inventive method may be a round spectacle lens before glazing which has a diameter of at last 40 mm. In this case the low mean power zones occupy at least 40 % of an area which lies within the diameter of 40 mm. In particular, the low mean power zone in the upper viewing zone may cover all the lens element area within said diameter of 40 mm around the geometric centre of the lens element which lies above a lateral line running through the distance reference point.

In particular, the at least one free-form surface is designed such that the distance between the low mean power zone in the left peripheral zone and the low mean power zone the right peripheral zone is no larger than 25 mm and., in some embodiments, no larger than 20 mm.

Moreover, the at least one free-form surface may be designed such that the low mean power zone in the upper viewing zone, the low mean power zone in the left peripheral zone and the low mean power zone in the right peripheral zone form a contiguous low power zone .

In particular, the at least one free-form surface may be designed such that the addition power provided by the second refractive power relative to the first refractive power lies in the range of 1.0 D to 3.0 D.

The at least one free-form surface may be designed such that the low mean power zones in the left and right peripheral zones extend to a location below a lateral line running through the near reference point. In particular, the at least one free-form surface may be designed such that the low mean power zones in the left and right peripheral zones extend at least to lateral lines located 5 mm above and below a lateral line running through the near reference point.

In a first variant of the inventive method the at least one free-form surface is designed such that the low mean power zone in the upper viewing zone, the low mean power zone in the left peripheral zone and low mean power zone in the right peripheral zone form a contiguous low power zone. In this case, the second refractive power may represent an addition power of 1.5 D or less to the first refractive power. Moreover, the contiguous low mean power zone may occupy at least 50% of said area of the lens element which lies within a diameter of 40 mm around the geometric centre of the lens element.

In a second variant of the inventive method the at least one free-form surface is designed such that the second refractive power represents an addition power of more than 1.5 D and up to 2.0 D to the first refractive power and the low mean power zones in the left and right peripheral zones are separated from the low mean power zone in the upper viewing zone, where areas in which the mean refractive power is more than the first refractive power plus 0.125 D but does not exceed the first refractive power plus 0.5 D connect the low mean power zone in the upper viewing zone with each of the low mean power zones in the left and right peripheral zones.

In a third variant of the inventive method the at least one free-form surface is designed such that the second refractive power represents an addition power of more than 2.0D and up to 2.5 D to the first refractive power and the low mean power zones in the left and right peripheral zones are separated from the low mean power zone in the upper viewing zone, where an area in which the mean refractive power is more than the first refractive power plus 0.125 D but does not exceed the first refractive power plus 0.5 D connects the low mean power zone in the upper viewing zone with at least one of the low mean power zones in the left and right peripheral zones.

The at least one free-form surface may be designed such that the surface astigmatism inside the 40 mm diameter of the lens does not exceed 5.5 D,

The inventive method allows manufacturing an inventive spectacle lens with the advantages mentioned above with respect to the inventive progressive ophthalmic lens element. Therefore, with respect to the advantages of the inventive method it is referred to the advantages mentioned with respect to the inventive progressive ophthalmic lens element.

In addition, the invention provides a computer implemented method of designing a progressive spectacle lens which is adapted to a wearer with an individual as-worn position, said spectacle lens having a front surface and a back surface. This method comprises the steps of:
- providing the specific as-worn position of the wearer,
- providing a first refractive power for distance vision of the wearer,
- providing a second refractive power for near vision of the wearer,
- providing a target lens design defining
   - a refractive power distribution of the progressive spectacle lens comprising the first refractive power for distance vision and the second refractive power for near vision,
   - an upper viewing zone with a distance reference point providing a first refractive power adapted to distance vision;
   - a lower viewing zone with a near reference point providing a second refractive power adapted to near vision, the second refractive power providing an addition power relative to the first refractive power;
   - a corridor between the upper viewing zone and the lower viewing zone in which the refractive power gradually changes from the first refractive power to the second refractive power; and
   - a left peripheral zone and a right peripheral zone which are separated by the corridor and the lower viewing zone;
   - low mean power zones are present in the upper viewing zone, the left peripheral zone and the right peripheral zone where the mean refractive power the wearer experiences in the as-worn position does not exceed the first refractive power plus 0.125 D in said low mean power zones;
      wherein
   - the low mean power zones occupy at least 40 % of the area of the lens element optimising the shape of at least one of the front surface or the back surface in the as-worn position based on the

The invention further provides a computer program with program code for performing all method steps of the inventive computer implemented method of designing a progressive spectacle lens when the computer program is loaded or executed in a computer.

Further features, properties and advantages of the present invention will become apparent from the following detailed description of embodiments of the invention in conjunction with the accompanying drawings.
- Figure 1: shows the ray traced mean addition power contours for the roving eye within a 40 mm diameter circle around the geometric centre of the lens element with the addition power of about 1.5 D.
- Figure 2: shows a contour plot of surface astigmatism for the lens element of Figure 1.
- Figure 3: shows a plot of the ray traced mean addition power for the lens element of Figure 1 along an implied eye path shown in Figure 2.
- Figure 4: shows a contour plot of the mean surface addition power for the lens element of Figure 1.
- Figure 5: shows plots of the mean surface addition power for the lens element of Figure 1 along a plurality of horizontal lines shown in Figure 4.
- Figure 6: shows the ray traced mean addition power contours for the roving eye within a 40 mm diameter circle around the geometric centre of the lens element with the addition power of about 2.0 D.
- Figure 7: shows a contour plot of surface astigmatism for the lens element of Figure 6.
- Figure 8: shows a plot of the ray traced mean addition power for the lens element of Figure 6 along an implied eye path shown in Figure 7.
- Figure 9: shows a contour plot of mean surface addition power for the lens element of Figure 6.
- Figure 10: shows plots of mean surface addition power for the lens element of Figure 6 along a plurality of horizontal lines shown in Figure 9.
- Figure 11: shows the ray traced mean addition power contours for the roving eye within a 40 mm diameter circle around the geometric centre of the lens element with the addition power of about 2.5 D.
- Figure 12: shows a contour plot of surface astigmatism for the lens element of Figure 11.
- Figure 13: shows a plot of the ray traced mean addition power for the lens element of Figure 11 along a path shown in Figure 12.
- Figure 14: shows a contour plot of mean surface addition power for the lens element of Figure 11.
- Figure 15: shows plots of mean surface addition power for the lens element of Figure 11 along a plurality of horizontal lines shown in Figure 14.
- Figure 16: shows the ray traced mean addition power contours for the roving eye within a 40 mm diameter circle around the geometric centre of the lens element with the addition power of about 1.5 D having the progressive surface on the eye side of the lens.
- Figure 17: shows a contour plot of the back surface astigmatism for the lens element of Figure 16.
- Figure 18: shows a plot of the ray traced mean addition power for the lens element of Figure 16 along an implied eye path shown in Figure 17.
- Figure 19: shows a contour plot of the mean surface addition power on the back surface of the lens element of Figure 16.
- Figure 20: shows plots of mean surface addition power for the lens element of Figure 16 along a plurality of horizontal lines shown in Figure 19.
- Figure 21: shows the ray traced mean addition power contours for the roving eye within a 40 mm diameter circle around the geometric centre of the lens element according to the prior art.
- Figure 22: shows a contour plot of surface astigmatism for the prior art lens element of Figure 21.
- Figure 23: shows a plot of the ray traced mean surface addition power for the prior art lens element of Figure 21 along an implied eye path shown in Figure 22.
- Figure 24: shows a contour plot of mean surface addition power for the prior art lens element of Figure 21.
- Figure 25: shows plots of mean surface addition power for the prior art lens element of Figure 16 along a plurality of horizontal lines shown in Figure 24.

Before turning to a description of embodiments of the present invention, an explanation of some expressions used throughout the following specification will be given below.

The term "progressive ophthalmic lens element" should include all forms of individual refractive optical bodies employed in the ophthalmic arts, including, but not limited to lenses, lens wafers and semi-finished lens blanks requiring further finishing to a particular prescription (so-called pucks).

The term "surface astigmatism" means a reference to a measure of the degree to which the curvature of a lens varies among intersecting planes which are normal to the surface of the lens at a point of the surface. The surface astigmatism is equal of the difference between the minimum and maximum curvature of the lens surface in any of those intersecting planes multiplied by (n-1), where n is the reference index of refraction.

The term "fitting cross" designates a marking located at a point on a surface of a progressive ophthalmic lens element which is stipulated by the manufacturer as a reference point for positioning the lens element in front of a wearer's eye.

The term "refractive power" implies the net power error calculated from optical ray tracing set up for the roving eye viewing objects at infinity with the lens fitted to line up the centre of the pupil with the fitting cross and the centre of rotation of the eye located 27 mm behind the back vertex point of the lens. This power is referenced to the sphere originating in the centre of rotation of the eye and touching the back vertex point of the lens and known as the "reference sphere". The refractive power is determined by computing the vergence delivered at the reference sphere by the lens and subtracting the corresponding vergence required by the eye in order for a sharp image to be seen. This measures how well the lens meets the focal needs of the eye under the conditions of the selected eye - lens model. The model includes the Listing rotation modelling of the eye turn and assumes that the lens has a typical pantoscopic tilt of 7° at the fitting cross and a wrap angle of 0°.

The term "distance reference point" (DRP) refers to a point on the surface of the upper half of the progressive ophthalmic lens element at which the refractive power for distance vision applies.

The expression "upper viewing zone" refers to a zone in the surroundings of the distance reference point which has a refractive power that corresponds to or is close to the distance vision power and has an astigmatic error for the wearer in the as-worn position below 0.5 D.

The term "near reference point" (NRP) refers to a point on the surface of the lower half of the progressive ophthalmic lens element at which the refractive power of the near vision applies.

The expression "lower viewing zone" refers to a zone in the surroundings of the near reference point which has a refractive power that corresponds to or is close to the near vision power and has an astigmatic error for the wearer in the as-worn position below 0.5 D.

The term "corridor" describes an area between the upper viewing zone and the lower viewing zone in which the refractive power gradually changes from the distance refractive power to the near refractive power and in which the surface astigmatism is below 0.5 D.

The term "peripheral zone" refers to zones which have an astigmatic error for the wearer in the as-worn position of 0.5 D or above and which are located on the left and on the right of the corridor and the lower viewing zone.

The term "mean addition power" shall refer to the ray-traced refractive power at a given location of the lens minus the refractive power at the distance reference point.

The term "surface addition power" refers to the surface power of the lens at a given location minus the surface power at the distance reference point. If a scalar variant of the surface addition power is used, this scalar variant is called "mean surface addition power", as the surface power generally speaking is a 2x2 tensor.

The expression "eye path" refers to a visual fixation locus which, when the lens element is correctly designed for wearer, typically coincides with a locus of horizontal mid-points between nasal and temporal 0.5 D astigmatism contours when the wearer adjusts the fixation from a distant object, i.e. a far field object, to a close object, i.e. near field object.

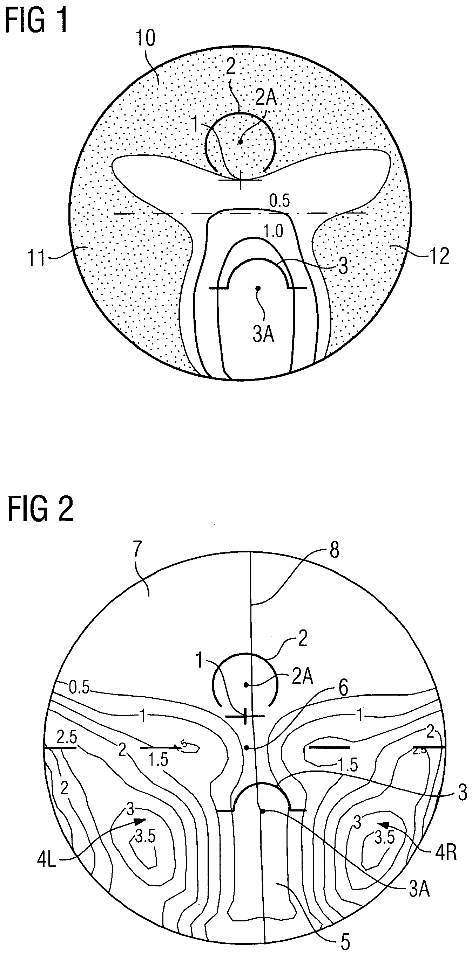

A first embodiment of the inventive progressive ophthalmic lens element will now be described with respect to Figures 1 to 5. The first embodiment represents a progressive ophthalmic lens element with a addition power of about 1.50 D.

Figure 1 shows the ray traced mean addition power contours for the roving eye inside a 40 mm diameter round frame of the progressive ophthalmic lens element of the first embodiment centred at the geometric centre of the lens element. It shows, in addition to the fitting cross 1, a part-circle 2 the centre of which is given by the distance reference point 2A and a semi-circle 3 with the near reference point 3A at its centre. The contours shown in Figure 1 represent lines at which the mean addition power of the lens element is 0.25 D, 0.5 D and 1.0 D, respectively. The dotted zone in Figure 1 represents a zone in which the mean addition power does not exceed 0.125 D. This zone is called low mean power zone in the following. Hence, in the low mean power zone the mean refractive power of the lens element is not higher than the distance refractive power plus 0.125 D. Please note that in the low mean power zone the mean refractive power of the lens element may even be lower than the distance refractive power.

Figure 2 is a contour plot showing surface astigmatism of the front surface of the lens element of Figure 1. The surface astigmatism is indicated by contour lines representing steps of 0.5 D. As can be seen from Figure 2 there are contour lines on the right hand side and the left hand side of the corridor representing a surface astigmatism of 0.5 D which delimit left and right peripheral zones 4L, 4R. The maximum values of the astigmatism reached in the left and right peripheral zones 4L, 4R are about 3.5 D.

The left and right peripheral zones 4L, 4R are separated by the lower viewing zone 5 and the corridor 6 of the lens element. The zone above the 0.5 D surface astigmatism contour is the upper viewing zone 7 of the lens element.

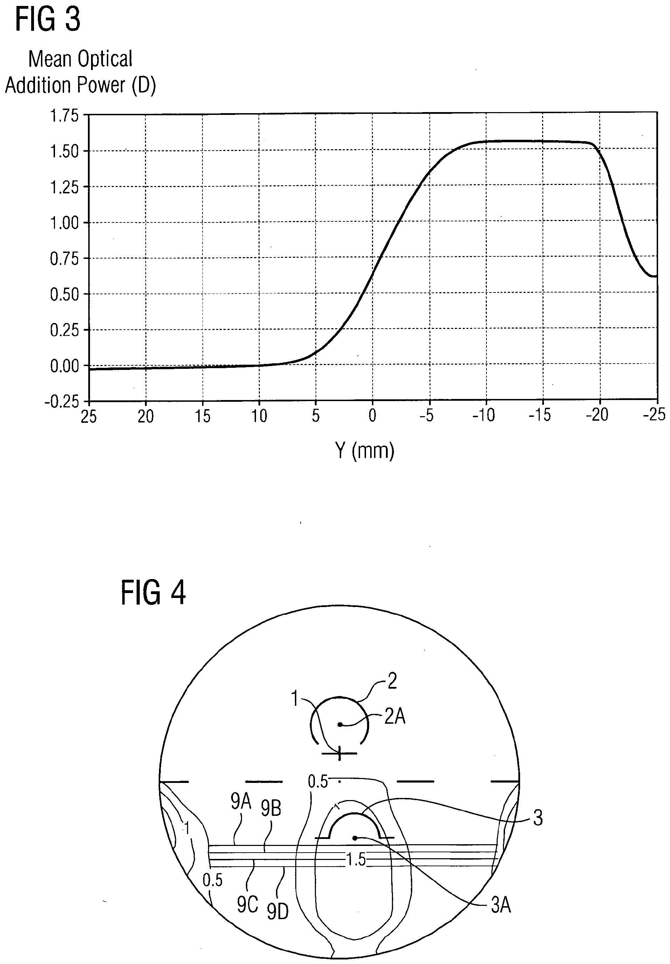

Figure 2 also shows the intended eye path line 8 of the lens element. The distribution of the ray traced mean addition of the lens front surface along the eye path line is shown in the plot of Figure 3. In this Figure, the horizontal axis represents the vertical distance y from an intersection of the eye path line 8 with a horizontal line running through the geometric centre of the lens element, which is located at y = 0, while the vertical axis represents the power that is added to the distance refractive power of the lens element in dioptres (D). Please note that a value of 0 D mean addition power does not mean that the refractive power at this particular location is zero but that the refractive power at this particular location corresponds to the distance refractive power according to the prescription of a patient.

As can be seen from the plot of Figure 3 the distance reference point DRP is located at a distance from y = 0 mm of 8 mm towards the upper end of the lens element, i.e. at a location of y = -8 mm. The upper viewing zone of the present embodiment begins at about y = 4 mm (the location of the fitting cross). As can further be seen from the plot of Figure 1 the ray traced mean addition power is below 0.125 D up to the upper vertical end of the lens element.

The near reference point NRP is located at about y = -8 mm and the lower viewing zone begins at about y = -6.1 mm (the location of the 95% of the nominal mean addition power along the eye path). The lower viewing zone includes a plateau of the ray traced mean addition power which extends from about y = -8 mm to about y = -20 mm and in which the ray traced mean addition power is nearly constant at 1.5 D. Hence, the near reference power is about 1.5 D higher than the distance reference power.

Between about y = 4 mm and about y = -8 mm the ray traced mean addition power rises steeply from about 0.125 D to about 1.5 D. The area in which the mean addition power rises steeply corresponds to the corridor 6.

Figure 4 shows a contour plot representing the mean surface addition power with the contour lines incremented in steps of 0.5 D. In addition, Figure 4 shows horizontal lines 9A to 9D crossing the near vision zone which run perpendicular to the eye path line 8.

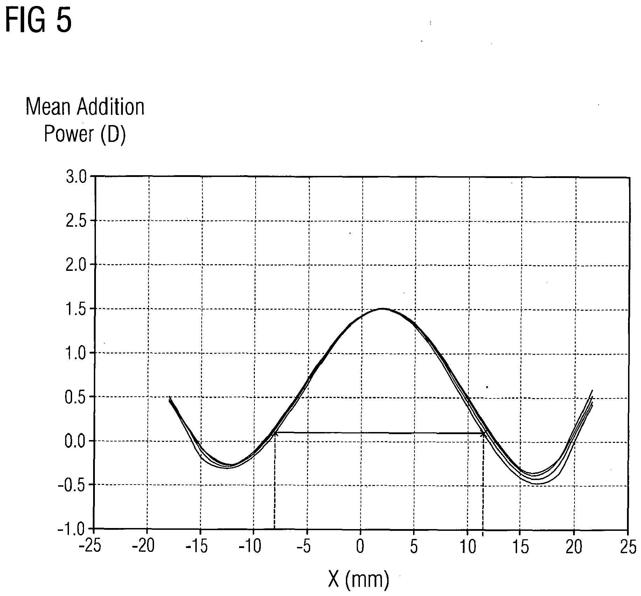

Figure 5 shows a plot representing the surface addition powers along the horizontal lines 9A to 9D shown in Figure 4. In this plot, the horizontal axis represents the distance x from a vertical line running through the geometric centre of the lens element and the vertical axis represents the mean addition power in dioptres (D). Please note that the eye path line 8 is skewed due to the convergence of the eyes when viewing the near objects and this line does not coincide with the zero value of the horizontal axis of Figure 5 in the area of the horizontal lines 9A to 9D. From Figure 5 it can be seen that the mean addition power is highest (1.5 D) at the eye path line and drops towards the left and the right rim of the lens element to values below 0.125 D at about x = -8 mm and about x = 12 mm. The distance between these points is, in the present embodiment, 20 mm. Please note that towards the corridor and towards the lower rim of the lens element the distance between the low mean power zones in the left and right peripheral zones 4L, 4R becomes smaller (see Figure 1) so that the distance of 20 mm is the maximum distance in the present embodiment.

In the present embodiment, the mean surface addition power drops further to a value below the distance reference power before it rises again to finally exceed a value of 0.125 D at about x = -16 mm and about x = 19 mm, respectively. The zones between about x = -8 mm and about x = -16 mm and between about 12 mm and about 19 mm on the other side are part of the low mean power zone shown in Figure 1.

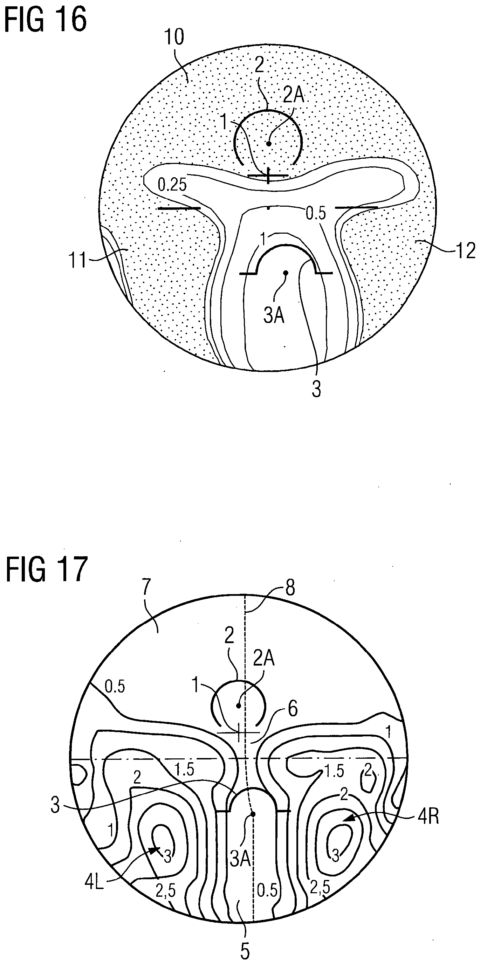

As becomes clear from Figure 1, the low mean power zone of the present embodiment is contiguous and includes almost the whole upper viewing zone and large parts of the left and right peripheral zones. Moreover, the gradient by which the mean addition power drops from the lower viewing zone 5 towards the left and right peripheral zones 4L, 4R is steep compared to conventional progressive ophthalmic lens elements, which will be exemplary described later with reference to Figures 16 to 20.

As already mentioned, the plot of Figure 1 represents a circle with a diameter of 40 mm. The total area of this circle is 1256.65 mm². The area covered by the low mean power zone is 758.9 mm², which corresponds to 60.4 % of the total area of the circle. Hence, a large fraction of the progressive ophthalmic lens element of the first embodiment provides virtually no mean addition power.

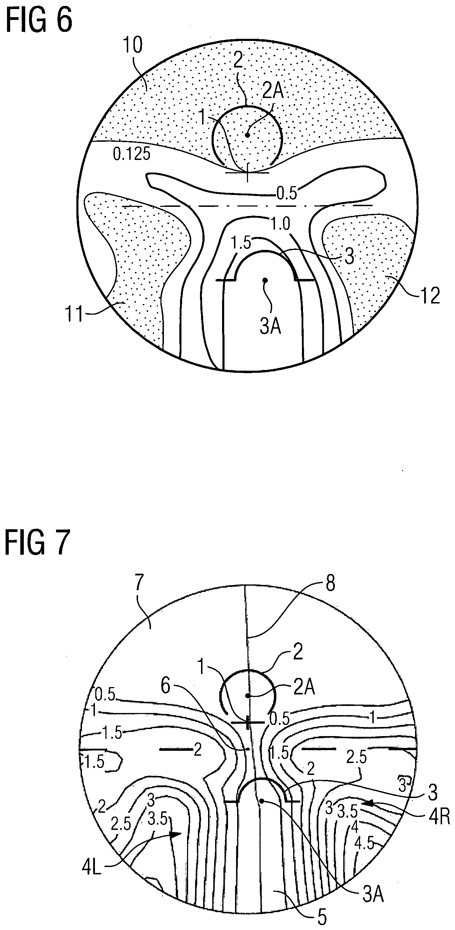

A second embodiment of the present invention will now be described with respect to Figures 6 to 10. The description of the second embodiment will focus on the differences to the first embodiment in order to avoid repetitions. Hence, features of the second embodiment which are substantially similar to features of the first embodiment are denominated by the same reference numerals as in the first embodiment and will not be explained again. The second embodiment represents a progressive ophthalmic lens element in which the addition power in the near viewing zone is about 2.00 D instead of about 1.5 D.

Figure 6 shows a 40 mm diameter round frame of the progressive ophthalmic lens element of the second embodiment. This Figure corresponds to Figure 1 of the first embodiment. Like in the first embodiment the ray traced mean addition power within the dotted area may as well be negative, i.e. the mean refractive power present in the low power region may be less than the distance refractive power.

Figure 7, which corresponds to Figure 2 of the first embodiment, shows a contour plot representing surface astigmatism. As can be seen from Figure 7, the maximum value of the astigmatism reached in the lens element of the second embodiment is about 4.5 in the right peripheral zone.

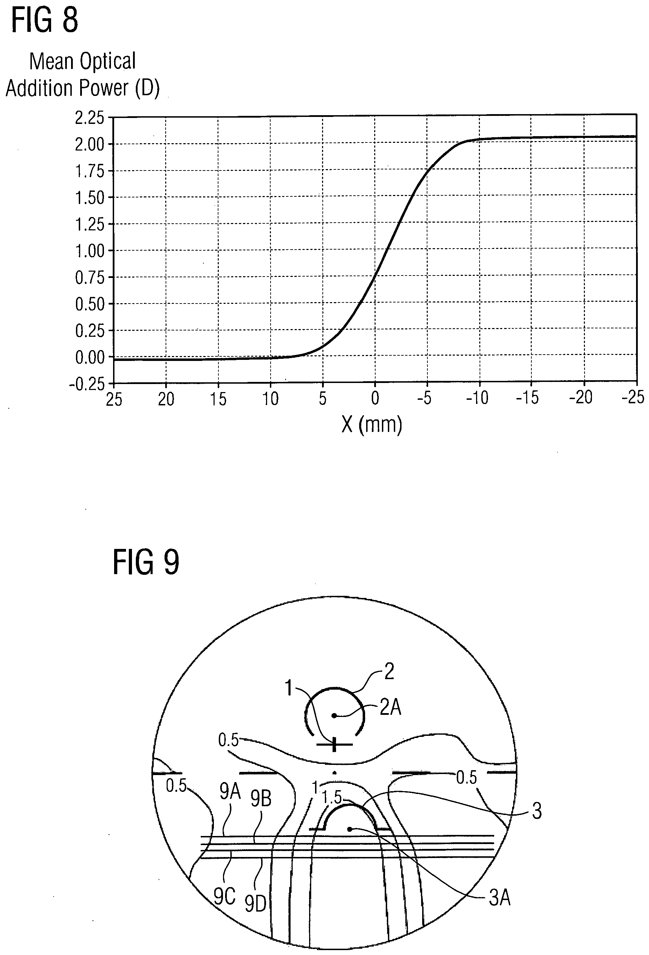

Figure 8, which corresponds to Figure 3 of the first embodiment, shows the ray traced mean addition power along the eye path line 8 shown in Figure 7. The locations of the distance reference point DRP, the near reference point NRP and the corridor are the same as in the first embodiment. Please note that the ray traced mean addition power stays almost constant in the direction of the eye line 8 to the lower rim of the 50 mm diameter circle shown in Figure 7.

Figure 9, which corresponds to Figure 4 of the first embodiment, shows a contour plot representing the mean surface addition power in the progressive ophthalmic lens element within the 50 mm diameter circle of the progressive ophthalmic lens element.

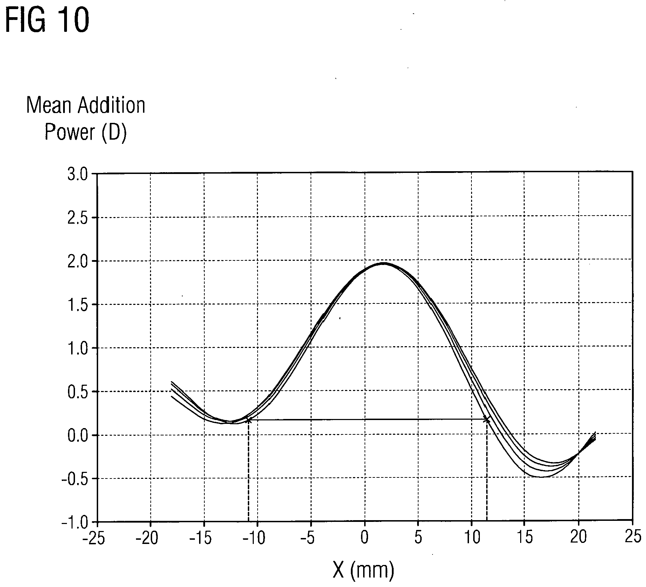

Figure 10, which corresponds to Figure 5 of the first embodiment, shows a plot representing the mean surface addition power along the four horizontal lines 9A to 9D shown in Figure 9. As can be seen from Figure 10, the mean surface addition power drops in -x-direction as well as in +x-direction from 2.0 D at x = 2 mm (which corresponds to the location of the eye line) to 0.125 D. The value of 0.125 D is reached at about x = -11 mm and about x = +12 mm, respectively. Hence, the low mean power zones in the left and right peripheral regions are spaced apart by about 23 mm. Please note that towards the corridor the distance between the low mean power zones in the left and right peripheral zones 4L, 4R becomes smaller while the distance between the low mean power zones 11, 12 in the left and right peripheral zones 4L, 4R only increases slightly towards the lower rim of the lens element (see Figure 6). The distance between the low mean power zones in the left and right peripheral zones 4L, 4R does not exceed about 25 mm. The gradient by which the mean surface addition power drops from the lower viewing zone 5 towards the left and right peripheral zones 4L, 4R is slightly steeper than in the first embodiment.

In the second embodiment, the mean surface addition power in the right peripheral zone 4R drops further to a value below the distance reference power before it rises again to reach the distance refractive power at about x = 22 mm. Hence, the width of the low mean power zone along the horizontal lines 9A to 9D in the right peripheral zone is more than 10 mm. In the left peripheral zone 4L, the mean surface addition power does not drop below zero along the horizontal lines 9A to 9D shown in Figure 9 and reaches 0.125 D again at about x = -14 mm so that the width of the low mean power zone is about 3 mm, which results in a narrower low mean power zone than in the right peripheral zone 4R. This asymmetry is due to the fact that the eye line 8 is offset from x =0. However, please note from Figure 6 that the width of the low mean power zone in the left peripheral zone 4L is narrowest in the region of the horizontal lines 9A to 9D so that the width of about 3 mm represents the minimum width of the low mean power zone in the left peripheral zone.

As can also be seen in Figure 6, the low mean power zone of the present embodiment is not contiguous and includes three disjointed sub zones 10, 11, 12, where the first sub-zone 10 more or less coincides with the upper viewing zone 7, the second sub-zone 11 is located in the left peripheral zone 4L and the third sub-zone 12 is located in the right peripheral zone 4L. The first sub-zone 10 is connected with the second sub-zone 11 and the third sub-zone 12 by sections of the lens element in which the ray traced mean addition power is between 0.125 D and 0.5 D.

In the second embodiment, the area of the low mean power zone within the 40 mm diameter circle shown in Figure 6 is 589.4 mm². Hence, the low mean power zone of the second embodiment occupies 46.9 % of the area within the 40 mm diameter circle shown in Figure 6.

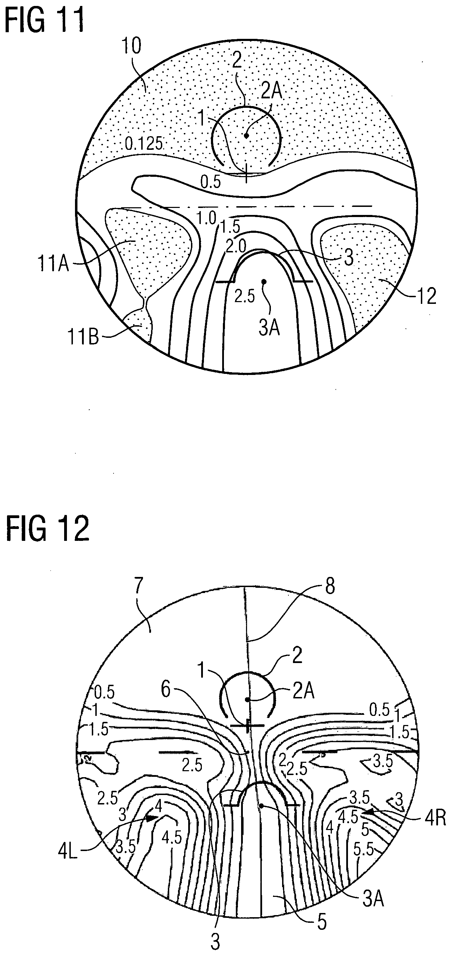

A third embodiment of the inventive progressive ophthalmic lens element will now be described with respect to Figures 11 to 15. Again, those elements that do not substantially differ from elements shown in the first embodiment will be denominated by the same reference numerals as in the first embodiment and will not be explained again to avoid repetitions. The third embodiment represents a progressive ophthalmic lens element with an addition power of about 2.50 D.

Figure 11 shows a 40 mm diameter round frame of the progressive ophthalmic lens element of the third embodiment. This Figure corresponds to Figure 1 of the first embodiment. The dotted area is the low mean power zone of the third embodiment.

Figure 12, which corresponds to Figure 2 of the first embodiment, shows a contour plot of the surface astigmatism of the lens element according to the third embodiment of the invention. The maximum value of the astigmatism reached in the lens element is about 5.5 in the right peripheral zone 4R.

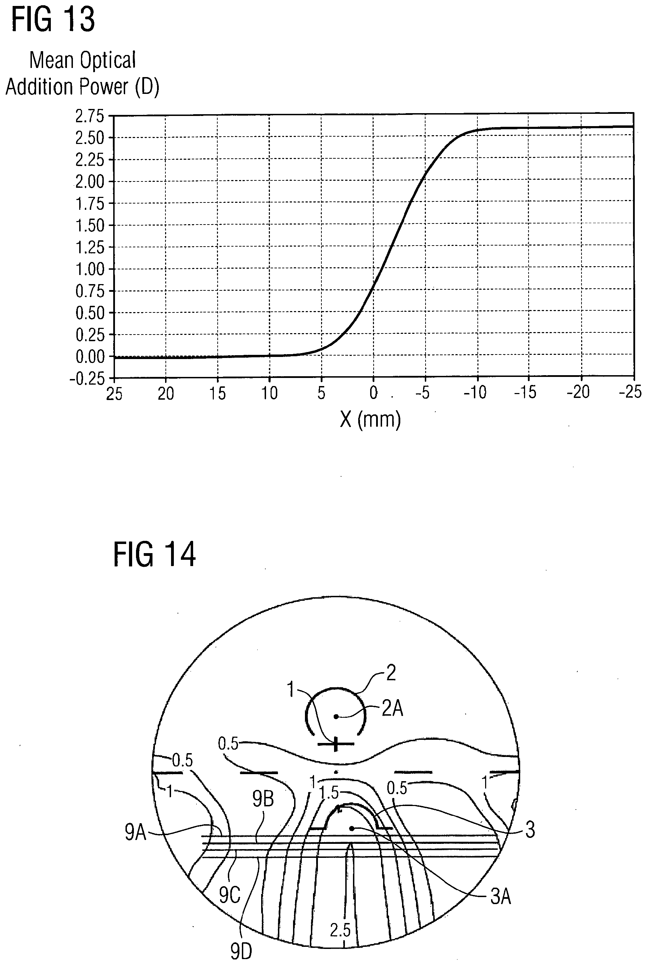

Figure 13, which corresponds to Figure 3 of the first embodiment, shows a plot of the ray traced mean surface addition power along the eye path line 8. The locations of the distance reference point DRP, the near reference point NRP and the corridor are the same as in the first embodiment.

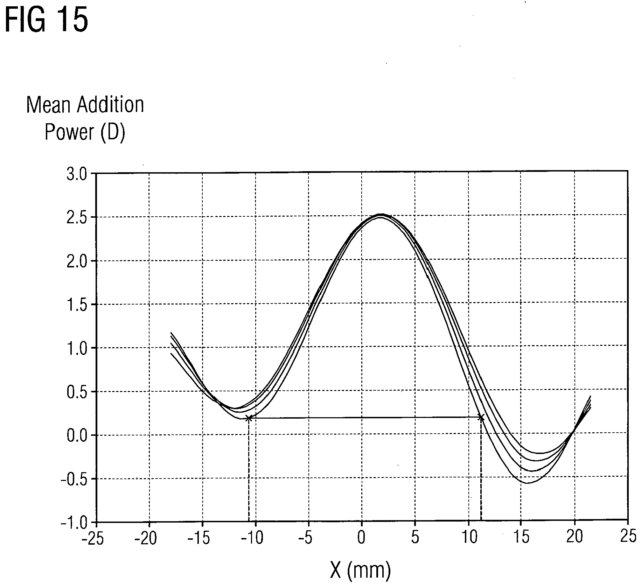

Figure 14, which corresponds to Figure 4 of the first embodiment, shows a contour plot representing the mean surface addition power within the 50 mm diameter circle and Figure 15, which corresponds to Figure 5 of the first embodiment, shows the mean surface addition power along the horizontal lines 9A to 9D in Figure 14. From the maximum mean surface addition power the mean surface addition power drops to the left and the right until a mean surface addition power of 0.125 D is reached. Please note that on the left side, i.e. -x direction, the plot shows a mean surface addition power that lies above 0.125 D for three of the four lines 9A to 9D. This is due to the fact that the low mean power zone 11 in the left peripheral zone 4L comprises two separate parts 1 A, 11 B which are divided by a section of the left peripheral zone 4L in which the mean surface addition power lies above 0.125 D and reaches about 0.25 D. Three of the four vertical lines 9A to 9D run through the zone between the two parts of the low mean power zone 11 in the left peripheral zone 4L.

The value of 0.125 D is reached at about x = -11 mm and about x = +12 mm, respectively. Hence, the low mean power zones in the left and right peripheral regions are spaced apart by about 23 mm. The gradient by which the mean surface addition power drops from the lower viewing zone 5 towards the left and right peripheral zones 4L, 4R is even steeper than in the second embodiment.

The distance between the low mean power zone in the left peripheral zone 4L and the low mean power zone in the right peripheral zone 4R is about 23 mm. Please note that towards the corridor the distance between the low mean power zones in the left and right peripheral zones 4L, 4R becomes smaller and the distance between the low mean power zones in the left and right peripheral zones 4L, 4R only increases slightly towards the lower rim of the lens element. The distance between the low mean power zones in the left and right peripheral zones 4L, 4R does not exceed about 25 mm.

As can be seen from Figure 11 the low mean power zones 10, 11A, 11B, 12 in the upper viewing zone 7, the left peripheral zone 4L and the right peripheral zone 4R are disjointed like in the second embodiment. Moreover the low mean power zone in the left peripheral zone is formed by two disjointed portions 11 A, 11B. However, the mean surface addition power does not exceed 0.25 D between these two portions. The low mean power zones 11A, 11B, in the left peripheral zone 4L are connected to the low mean power zone 10 in the upper viewing zone 7 via a section of the lens element in which the mean surface addition power is between 0.125 D and 0.5 D. The low mean power zone 12, in the right peripheral zone 4R is connected to the low mean power zone 10 in the upper viewing zone 7 via a section of the lens element in which the mean surface addition power is between 0.125 D and 1.0 D.

The area of the 40 mm diameter circle shown in Figure 11 that is occupied by the low mean power zone is 567.1 mm², which corresponds to a fraction of 45 % of the total area within the 40 mm diameter circle.

In the embodiments of the progressive ophthalmic lens element which have been described so far, the refractive power at the distance reference point is -2.5 DS (dioptres of spherical power) and an free-form surface providing the mean addition power is located on the front surface of the lens element, while the back surface is spherical with a sphere of 2.4 D in 1.530 refractive index although the material of the lens element has a refractive index of 1.594 (It is a historical convention to indicate the surface power of lenses, in particular of spherical lenses, in the reference refractive index of 1.530 regardless of the material of the lens). However, the free-form surface providing the mean addition power may as well be located on the back surface of the lens element with the front surface being spherical. Please note that a toric back surface (if the free-form surface is formed on the front) or a toric front surface (if the free-form surface is formed on the back) would also be possible. A further option is to give both the back surface and the front surface an free-form shape so that the free-form back surface and the free-form front surface together provide the addition power of a lens.

In the following, a fourth embodiment will be described with respect to figures 16 to 20. The fourth embodiment represents a progressive ophthalmic lens element having the refractive index of 1.594 in which the refractive power at the distance reference point is -2.5 DS (diopters of spherical power) and the mean addition power in the near viewing zone is about 1.5 D as in the first embodiment. The main difference between the first embodiment and the fourth embodiment is that the mean addition power of the fourth embodiment is provided by a progressive free-form back surface rather than by a progressive free-form front surface, as was the case in the first embodiment.

The front surface of the fourth embodiment is a sphere of 2.4 D in the reference refractive index of 1.530. Features of the fourth embodiment which are substantially similar to features of the first embodiment are denominated by the same reference numerals as in the first embodiment and will not be explained again.

Figure 16 shows a 40 mm diameter round frame of the progressive ophthalmic lens element of the second embodiment. This Figure corresponds to Figure 1 of the first embodiment. Like in the first embodiment the ray traced mean addition power within the dotted area has the mean power not exceeding the distance vision power by more than 0.125 D.

Figure 17, which corresponds to Figure 2 of the first embodiment, shows a contour plot representing surface astigmatism of the back surface. As can be seen from comparing Figure 17 to Figure 2, the surface astigmatism of the back surface in the fourth embodiment is almost identical to the surface astigmatism of the front surface in first embodiment.

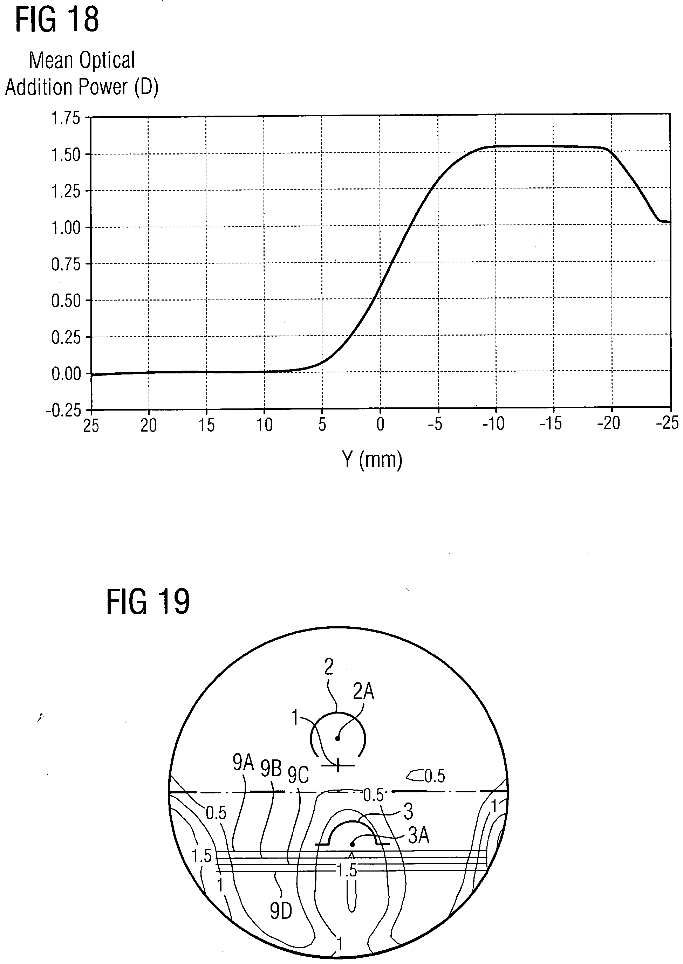

Figure 18, which corresponds to Figure 3 of the first embodiment, shows the ray traced mean addition power along the eye path line 8 shown in Figure 17. The locations of the distance reference point DRP, the near reference point NRP and the corridor are the same as in the first embodiment. Altogether, the characteristics of the ray traced mean addition power along the eye path line is very similar to the ray traced mean addition power along the eye path line of the first embodiment.

Figure 19, which corresponds to Figure 4 of the first embodiment, shows a contour plot representing the mean surface addition power of the back surface of the progressive ophthalmic lens element of the fourth embodiment within the 50 mm diameter circle of the progressive ophthalmic lens element.

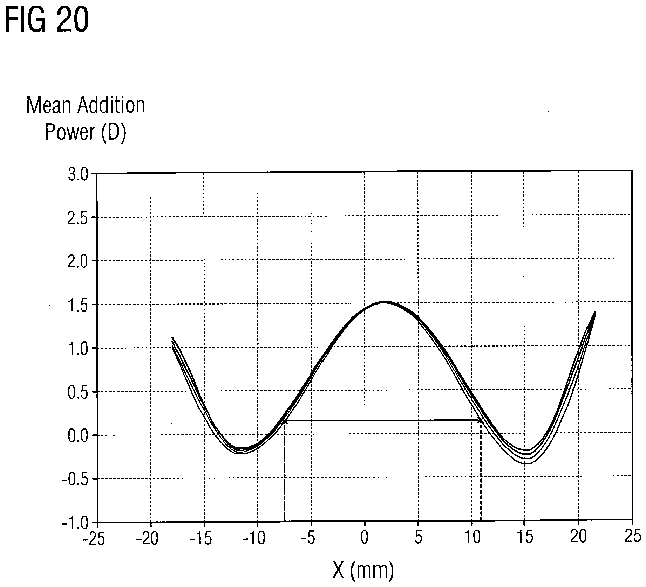

Figure 20, which corresponds to Figure 5 of the first embodiment, shows a plot representing the mean surface addition power of the back surface of the progressive ophthalmic lens element along the four horizontal lines 9A to 9D shown in Figure 19.

The area of the low mean power zone within the 40 mm diameter circle shown in Figure 16 is 764.4 mm² in the fourth embodiment. Hence, the low mean power zone of the fourth embodiment occupies 60.8 % of the area within the 40 mm diameter circle shown in Figure 16.

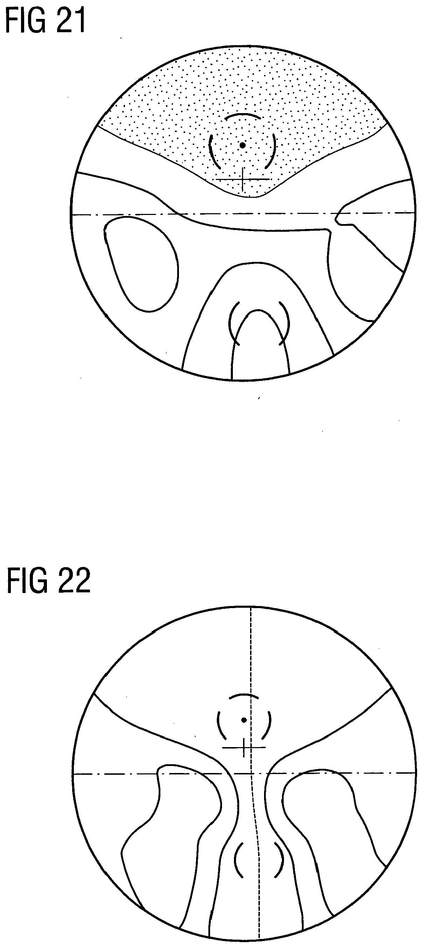

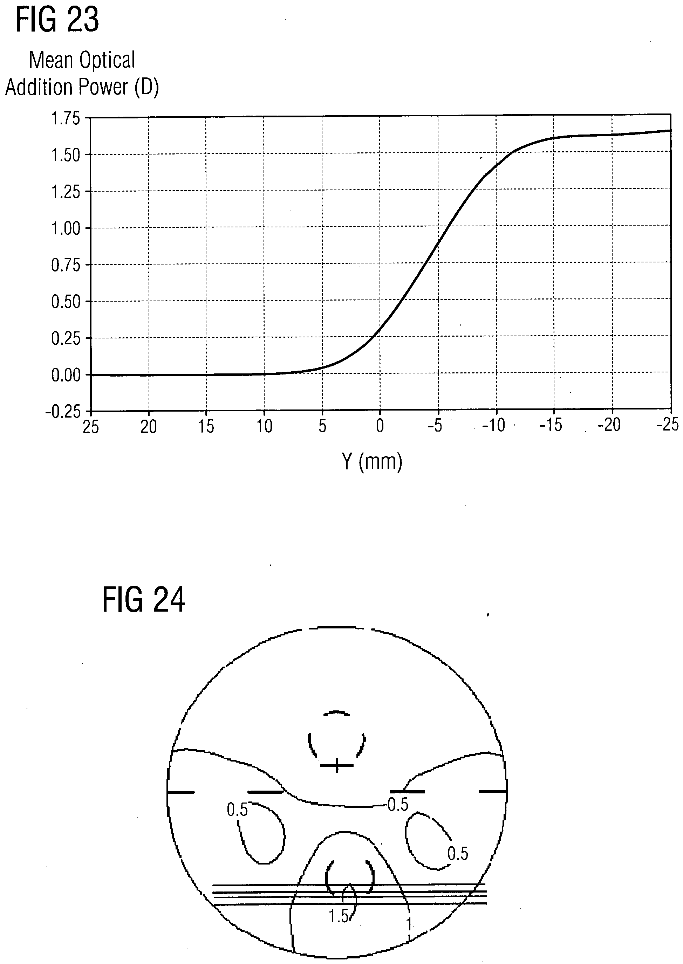

For comparison, a typical prior art lens element having the refractive index of 1.594 with a mean addition power of 1.5 D is shown in Figures 21 to 25 which correspond to Figures 1 to 5 of the first embodiment, respectively.

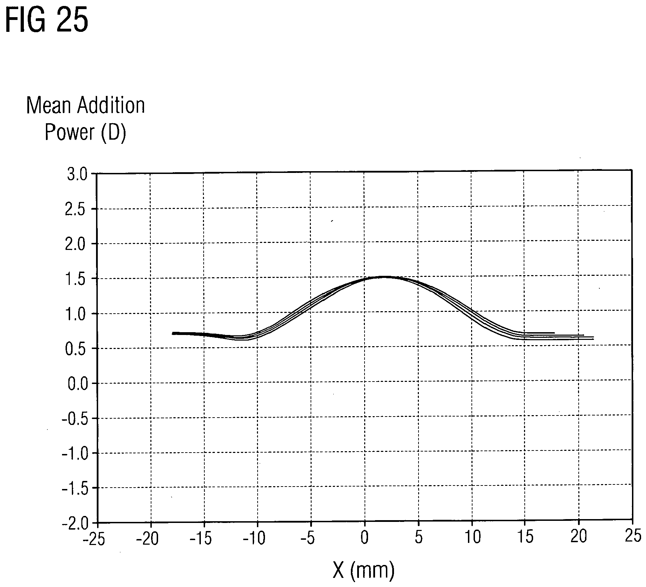

As can be seen from Figure 21, the ray traced mean addition power in the peripheral zones is always more than 0.125 D and in large areas of the peripheral zones also more than 0.5 D while in the lens elements of the first and fourth embodiments (which also have a ray traced mean addition power of 1.5 D) large sections of the peripheral zones do not exceed a ray traced mean addition power of 0.125 D (compare to Figures 1 and 16). The area of the low mean power zone (dotted area) within the 40 mm diameter circle of the prior art lens element shown in Figure 21 is 401.2 mm². Hence, the low mean power zone of the prior art lens element occupies only about 32% of the area within the 40 mm diameter circle, while in an inventive lens element according to the first embodiment of the invention the low mean power zone occupies about 60% of the area within the 40 mm diameter circle, which is almost twice as much as in the prior art lens element. Even in the lens elements of the second and third embodiments, which have more ray traced mean addition power than the prior art lens element shown in Figures 21 to 25, the low mean power zone with 45% occupies a considerably larger fraction of the area within the 40 mm diameter circle than the low mean power zone of the prior art lens element does. In addition, a comparison of Figures 5, 10, 15, and 20 with Figure 25 shows that the gradient by which the mean surface addition power changes from the lower viewing zone towards the left and right peripheral zones is considerably steeper in the inventive lens elements than in the prior art lens element.

The present invention provides a progressive ophthalmic lens element in which a large low mean power zone with a ray traced mean addition power not exceeding 0.125 D is present which occupies at least 45% of an area within a 40 mm diameter circle around the geometric centre of the lens element. In all depicted embodiments the low mean power zone is present in the peripheral zones on both sides of the lower viewing zone and the corridor. In contrary thereto, the fraction of low mean power zones in state of the art progressive ophthalmic lens elements does not exceed about 35 % of an area within a 40 mm diameter circle around the geometric centre of the respective lens elements. Moreover, the state of the art lens elements show no low mean power zones with a ray traced mean addition power below 0.125 D in the peripheral zones, or, if such low mean power zones are present in the peripheral zones they are only present in one of the right and left peripheral zones and they only represent a negligible areal fraction of the respective peripheral zone.

According to an embodiment of the inventive method of manufacturing a progressive spectacle lens, the inventive progressive spectacle lens may be individually manufactured for a wearer. The method includes the steps of obtaining the specific as-worn position of the wearer, obtaining a first refractive power for distance vision of the wearer, obtaining a second refractive power for near vision of the wearer and providing a semi-finished lens blank as a raw lens. In a semi-finished lens blank, one lens surface is already finished. This surface is typically a spherical or toric surface. In the present embodiment, the finished lens surface is the front surface. However it may as well be the rear surface if the free-form surface is to be formed on the front surface.

Based on the specific as-worn position of the wearer, the first refractive power and the second refractive power, a free-form surface on the rear surface of the semi-finished lens blank is formed. This free-form surface defines the upper viewing zone (7) with the distance reference point (2A), the lower viewing zone (5) with the near reference point (3A) and the corridor (6) between the upper viewing zone (7), the lower viewing zone (5), as well as a left peripheral zone (4L) and a right peripheral zone (4R) which are separated by the corridor (6) and the lower viewing zone (5). The free-form surface is formed such that low mean power zones (10, 11, 12) are present in the upper viewing zone (7) and at least one of the left peripheral zone (4L) and the right peripheral zone (4R). In the specific as-worn position, the mean refractive power experienced by a wearer does not exceed the first refractive power plus 0.125 D in said low mean power zones (10, 11, 12). Moreover, said at least one free-form surface is formed such that the low mean power zones (10, 11, 12) occupy at least 40 % of the area of the progressive spectacle lens.

Although the free-form surface is formed on the rear surface of the semi-finished lens blank in the present embodiment of the inventive method, the free-form surface may as well be formed on the front surface. In this case, the rear surface of the semi-finished lens blank would be spherical or toric.

Please note that the raw lens does not need to be a semi-finished lens blank but may by any form of raw material suitable as starting point for forming a spectacle lens.

The spectacle lens may be designed by using a computer implemented method. In this method, the specific as-worn position of the wearer, the first refractive power for distance vision of the wearer and the second refractive power for near vision of the wearer are provided together with a target lens design. This target lens design defines
- a refractive power distribution of the progressive spectacle lens comprising the first refractive power for distance vision and the second refractive power for near vision,
- an upper viewing zone (7) with a distance reference point (2A) providing a first refractive power adapted to distance vision;
- a lower viewing zone (5) with a near reference point (3A) providing a second refractive power adapted to near vision, the second refractive power providing an addition power relative to the first refractive power;
- a corridor (6) between the upper viewing zone (7) and the lower viewing zone (5) in which the refractive power gradually changes from the first refractive power to the second refractive power; and
- a left peripheral zone (4L) and a right peripheral zone (4R) which are separated by the corridor and the lower viewing zone (5);
- low mean power zones (10, 11, 12) are present in the upper viewing zone (7), the left peripheral zone (4L) and the right peripheral zone (4R) where the mean refractive power the wearer experiences in the as-worn position does not exceed the first refractive power plus 0.125 D in said low mean power zones (10, 11, 12).

The low mean power zones (10, 11, 12) occupy at least 40 % of the area of the lens element optimising the shape of at least one of the front surface or the back surface in the as-worn position based on the target lens design. Information about how to optimise the shape of a spectacle lens surface can be found in EP 0 857 993 A2 or in Werner Köppen, "Konzeption und Entwicklung von Gleitsichtgläsern" DOZ 10/95, pages 42-46.

Although the present invention has been described with respect to four embodiments for illustrative reasons it is clear to a person skilled in the art that embodiments which differ from the depicted embodiments are possible. For example, the present embodiments show progressive ophthalmic lens elements with a maximum mean addition power of about 1.5 D, 2.0 D and 2.5 D. However, other maximum mean addition powers are possible. Typical maximum mean addition powers lie between 1.0 and 3.0 D while addition powers of 1.5 D to 2.5 D are the most common ones. The present invention shall, therefore, not be restricted to the specific embodiments given above but only by the appended claims.

### REFERENCE NUMERALS

- 1: fitting cross
- 2: part-circle
- 3: semi-circle
- 4 L,R: left, right peripheral zone
- 5: lower viewing zone
- 6: corridor
- 7: upper viewing zone
- 8: eye line
- 9 A-D: horizontal lines
- 10: sub-zone
- 11: sub-zone
- 12: sub-zone

## Claims

1. A progressive ophthalmic lens element which is individually adapted to a specific as-worn position of a wearer, the progressive ophthalmic lens element including:
- an upper viewing zone (7) with a distance reference point (2A) providing in the as-worn position a first refractive power adapted to distance vision;
- a lower viewing zone (5) with a near reference point (3A) providing in the as-worn position a second refractive power adapted to near vision, the second refractive power representing an addition power relative to the first refractive power;
- a corridor (6) between the upper viewing zone (7) and the lower viewing zone (5) in which the refractive power gradually changes from the first refractive power to the second refractive power in the as-worn position; and
- a left peripheral zone (4L) and a right peripheral zone (4R) which are separated by the corridor and the lower viewing zone (5);
- low mean power zones (10, 11, 12) are present in the upper viewing zone (7), the left peripheral zone (4L) and the right peripheral zone (4R) where the mean refractive power the wearer experiences in the as-worn position does not exceed the first refractive power plus 0.125 D in said low mean power zones (10, 11, 12);
**characterised in that**
- the low mean power zones (10, 11, 12) occupy at least 40 % of the area of the lens element.

2. The progressive ophthalmic lens element of claim 1, **characterized in that** said as-worn position of the wearer is defined by means of simulating the roving eye around its centre of rotation, whereby the refractive power being calculated from optical ray tracing set up for the roving eye viewing objects at infinity with the lens element fitted to line up the centre of the pupil with the fitting point and the centre of rotation of the eye located in a specific distance in a range between 20 mm and 30 mm behind the back vertex point of the lens when the eye is in the primary position, the refractive power is referenced to the sphere originating in the centre of rotation of the eye and touching the back vertex point of the lens element, wherein the simulation includes the Listing rotation modelling of the eye turn and assumes that the lens has a pantoscopic tilt selected from the range between -20° and + 30° at the fitting point and a wrap angle selected from the range between - 5° and +15° at the fitting point.

3. The progressive ophthalmic lens element of claim 1 or 2', **characterised in that** the mean refractive power experienced by a wearer in the left peripheral zone (4L) and the right peripheral zone (4R) is always below the second refractive power.

4. The progressive ophthalmic lens element of claim 1 to claim 3, **characterised in that** the lens element is a round lens element which has a diameter of at least 40 mm and the low mean power zones (10, 11, 12) occupy at least 40 % of an area of the lens element which lies within a diameter of 40 mm around the geometric centre of the lens element.

5. The progressive ophthalmic lens element as claimed in one of the preceding claims, **characterised in that** the addition power provided by the second refractive power relative to the first refractive power lies in the range of 1.0 D to 3.0 D.

6. The progressive ophthalmic lens element as claimed in one of the preceding claims 1, **characterised in that** the distance between the low mean power zone (11) in the left peripheral zone (4L) and the low mean power zone (12) in the right peripheral zone (4R) is no larger than 25 mm.

7. The progressive ophthalmic lens element as claimed in any one of the preceding claims, **characterized in that** the low mean power zones (11, 12) in the left and right peripheral zones (4,L, 4R) extend to a location below a lateral line running through the near reference point (3A).

8. The progressive ophthalmic lens element as claimed in claim 7, **characterized in that** the low mean power zones (11, 12) in the left and right peripheral zones (4L, 4R) extend at least to lateral lines located 5 mm above and below a lateral line running through the near reference point (3A).

9. The progressive ophthalmic lens element as claimed in any one of the preceding claims, **characterized in that** the low mean power zone (10) in the upper viewing zone (7) covers all the lens element area within said diameter of 40 mm around the geometric centre of the lens element which lies above a lateral line running through the distance reference point (2A).

10. The progressive ophthalmic lens element as claimed in any one of the preceding claims, **characterized in that** the low mean power zone (10) in the upper viewing zone (7), the low mean power zone (11) in the left peripheral zone (4L) and low mean power zone (12) in the right peripheral zone (4R) form a contiguous low power zone.

11. The progressive ophthalmic lens element as claimed in claim 10, **characterized in that** the second refractive power represents an addition power of 1.5 D or less to the first refractive power.

12. The progressive ophthalmic lens element as claimed in claim 2 and claim 10 or claim 2 and claim 11, **characterized in that** the contiguous low mean power zone (10, 11, 12) occupies at least 50% of said area of the lens element which lies within a diameter of 40 mm around.the geometric centre of the lens element.

13. The progressive ophthalmic lens element as claimed in any one of the claims 1 to 8, **characterized in that** the second refractive power represents an addition power of more than 1.5 D and up to 2.0 D to the first refractive power and the low mean power zones (11, 12) in the left and right peripheral zones (4L, 4R) are separated from the low mean power zone (10) in the upper viewing zone (7), where areas in which the mean refractive power is more than the first refractive power plus 0.125 D but does not exceed the first refractive power plus 0.5 D connect the low mean power zone (10) in the upper viewing zone (7) with each of the low mean power zones (11, 12) in the left and right peripheral zones (4L, 4R).

14. The progressive ophthalmic lens element as claimed in any one of the claims 1 to 8, **characterized in that** the second refractive power represents an addition power of more than 2.0D and up to 2.5 D to the first refractive power and the low mean power zones (11, 12) in the left and right peripheral zones are separated from the low mean power zone (10) in the upper viewing zone (7), where an area in which the mean refractive power is more than the first refractive power plus 0.125 D but does not exceed the first refractive power plus 0.5 D connects the low mean power zone (10) in the upper viewing zone (7) with at least one of the low mean power zones (11, 12) in the left and right peripheral zones (4L, 4R).

15. The progressive ophthalmic lens element as claimed in any one of the preceding claims, **characterized in that** the surface astigmatism inside the 40 mm diameter of the lens does not exceed 5.5 D.

16. The progressive ophthalmic lens element as claimed in claim 15 and in claim 11 or claim 12, **characterized in that** the surface astigmatism inside the 40 mm diameter of the lens does not exceed 3.5 D.

17. The progressive ophthalmic lens element as claimed in claim 15 and in claim 13, **characterized in that** the surface astigmatism inside the 40 mm diameter of the lens does not exceed 4.5 D

18. A method of manufacturing a progressive spectacle lens which is adapted to a specific wearer with an individual as-worn position, which comprises the steps of:
- obtaining the specific as-worn position of the wearer,
- obtaining a first refractive power for distance vision of the wearer,
- obtaining a second refractive power for near vision of the wearer,
- providing a raw lens"
- based on the specific as-worn position of the wearer, the first refractive power and the second refractive power, forming at least one free-form surface on the front surface and/or the rear surface of the raw lens which defines an upper viewing zone (7) with a distance reference point (2A) providing in the as-worn position the first refractive power, a lower viewing zone (5) with a near reference point (3A) providing in the as-worn position the second refractive power, a corridor (6) between the upper viewing zone (7) and the lower viewing zone (5), a left peripheral zone (4L) and a right peripheral zone (4R) which are separated by the corridor (6) and the lower viewing zone (5), where the free-form surface is formed such that low mean power zones (10, 11, 12) are present in the upper viewing zone (7) and at least one of the left peripheral zone (4L) and the right peripheral zone (4R) where, in the specific as-worn position, a mean refractive power experienced by a wearer does not exceed the first refractive power plus 0.125 D in said low mean power zones (10, 11, 12), and where said at least one free-form surface is formed such that the low mean power zones (10, 11, 12) occupy at least 40 % of the area of the progressive spectacle lens.

19. A computer implemented method of designing a progressive spectacle lens which is adapted to a wearer with an individual as-worn position, said spectacle lens having a front surface and a back surface which comprises the steps of:
- providing the specific as-worn position of the wearer,
- providing a first refractive power for distance vision of the wearer,
- providing a second refractive power for near vision of the wearer,
- providing a target lens design defining
- a refractive power distribution of the progressive spectacle lens comprising the first refractive power for distance vision and the second refractive power for near vision,
- an upper viewing zone (7) with a distance reference point (2A) providing a first refractive power adapted to distance vision;
- a lower viewing zone (5) with a near reference point (3A) providing a second refractive power adapted to near vision, the second refractive power providing an addition power relative to the first refractive power;
- a corridor (6) between the upper viewing zone (7) and the lower viewing zone (5) in which the refractive power gradually changes from the first refractive power to the second refractive power; and
- a left peripheral zone (4L) and a right peripheral zone (4R) which are separated by the corridor and the lower viewing zone (5);
- low mean power zones (10, 11, 12) are present in the upper viewing zone (7), the left peripheral zone (4L) and the right peripheral zone (4R) where the mean refractive power the wearer experiences in the as-worn position does not exceed the first refractive power plus 0.125 D in said low mean power zones (10, 11, 12);
wherein
- the low mean power zones (10, 11, 12) occupy at least 40 % of the area of the lens element optimising the shape of at least one of the front surface or the back surface in the as-worn position based on the target lens design.

20. Computer program with program code for performing all method steps according to claim 19 when the computer program is loaded or executed in a computer.
